# EUROPEAN PATENT APPLICATION

(11) **EP 4 625 604 A1**
(43) Date of publication of application: **01.10.2025**
(21) Application number: 25160871.7
(22) Date of filing: 28.02.2025
(51) Int. Cl.: H01M 10/42, G01K 1/14

(54) **TEMPERATURE ACQUISITION ASSEMBLY AND BATTERY**

(30) Priority: 27.03.2024 CN 202410666250; 27.03.2024 CN 202421172787 U; 26.07.2024 WO PCT/CN2024/107844
(71) Applicant: Eve Energy Co., Ltd., Huizhou, Guangdong 516006 (CN)
(72) Inventor: YANG, Shuai, Huizhou, 516006 (CN)
(74) Representative: Tiburzi, Andrea

(57) **Abstract**

Provided are a temperature acquisition assembly and a battery. The temperature acquisition assembly includes a measurement frame (1), a tooling plate (2), a temperature measuring member (3), and an electrical connection member (4). The measurement frame (1) is mounted on the circumferential side surface of a cell (10) in a snap manner. The tooling plate (2) is detachably mounted on the measurement frame (1). The temperature measuring member (3) is mounted on the tooling plate (2) to measure the temperature of the cell (10). The temperature measuring member (3) is communicatively connected to a battery management system through the electrical connection member (4).

## Description

### TECHNICAL FIELD

The present application relates to the field of battery technology, for example, a temperature acquisition assembly and a battery.

### BACKGROUND

In an existing battery such as a large cylindrical battery, liquid cooling plates are usually mounted on two sides of a cell (a cylindrical cell) in the circumferential direction to cool the cell so that the battery can operate at a suitable temperature. To better manage the battery, the voltage and temperature of the cell are required to be acquired through a temperature acquisition assembly.

Due to the presence of the liquid-cooling plates, the mounting space above the cell is limited. Generally, a temperature measuring member of the existing temperature acquisition assembly is adhesively mounted on the upper surface of the negative electrode of the cell through a thermally conductive adhesive or is bonded to a temperature measuring frame of the temperature acquisition assembly through a thermally conductive adhesive to acquire the temperature of the cell in real time, but the temperature measuring member is cumbersome in dismounting and mounting and inconvenient to replace and maintain.

### SUMMARY

In a first aspect, an embodiment of the present application provides a temperature acquisition assembly. The temperature acquisition assembly includes a measurement frame, a tooling plate, a temperature measuring member, and an electrical connection member, the measurement frame is mounted on a circumferential side surface of a cell in a snap manner, the tooling plate is detachably mounted on the measurement frame, and the temperature measuring member is mounted on the tooling plate to measure the temperature of the cell; the temperature measuring member is communicatively connected to a battery management system through the electrical connection member.

In a second aspect, an embodiment of the present application provides a battery. The battery includes a battery module and the preceding temperature acquisition assembly, and the measurement frame of the temperature acquisition assembly engages with the circumferential side surface of the cell of the battery module.

The temperature acquisition assembly provided in the present application includes the measurement frame, the tooling plate, the temperature measuring member, and the electrical connection member. The tooling plate and the measurement frame are detachably assembled, which implements the quick dismounting and mounting of the tooling plate and the temperature measuring member on the measurement frame, facilitates the maintenance and replacement of the temperature measuring member, and improves the dismounting and mounting efficiency of the temperature measuring member.

The battery provided in the present application includes the preceding temperature acquisition assembly that can implement the quick dismounting and mounting of the tooling plate and the temperature measuring member on the measurement frame and improves the dismounting and mounting efficiency of the temperature measuring member.

### BRIEF DESCRIPTION OF THE DRAWINGS

FIG. 1 is a view illustrating the partial assembly structure of a temperature acquisition assembly and a cell of a battery according to an embodiment of the present application.
FIG. 2 is a view illustrating the structure of a temperature acquisition assembly according to an embodiment of the present application.
FIG. 3 is an exploded view illustrating the structure of a temperature acquisition assembly according to an embodiment of the present application.
FIG. 4 is a view illustrating the structure of a tooling plate according to an embodiment of the present application.
FIG. 5 is view one illustrating the structure of a measurement frame according to an embodiment of the present application.
FIG. 6 is view two illustrating the structure of a measurement frame according to an embodiment of the present application.
FIG. 7 is view three illustrating the structure of a measurement frame according to an embodiment of the present application.

### Reference list

- 10: cell
- 20: liquid-cooling plate
- 1: measurement frame
- 11: base body
- 110: mounting groove
- 111: bottom plate
- 1110: boss
- 112: first side plate
- 1120: detection port
- 113: second side plate
- 114: first snap
- 115: second snap
- 12: arm plate
- 120: slot
- 1201: notch
- 121: circular arc plate
- 2: tooling plate
- 21: accommodation hole
- 22: positioning groove
- 3: temperature measuring member
- 4: electrical connection member
- 41: first connection portion
- 42: second connection portion
- 5: first stiffener
- 6: adhesive layer
- 7: sealant
- 8: connector
- 9: second stiffener

### DETAILED DESCRIPTION

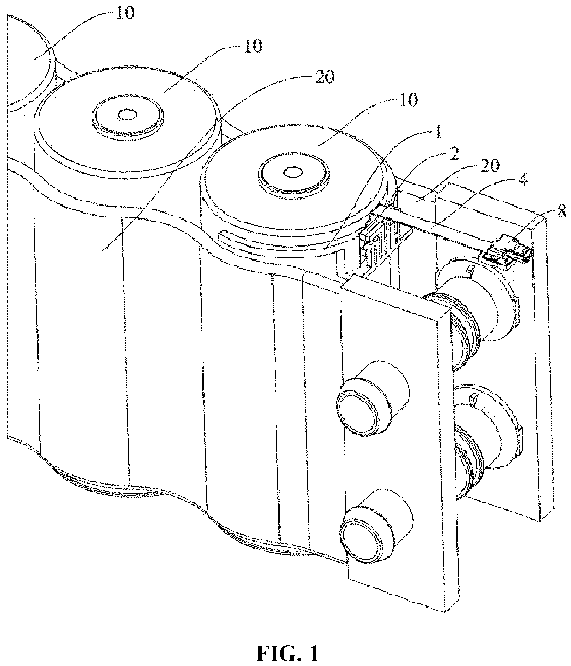

As shown in FIG. 1, this embodiment provides a battery. The battery includes a battery module and a temperature acquisition assembly. The battery module includes multiple cells 10 arranged in parallel. The temperature acquisition assembly is configured to acquire the temperature of the multiple cells 10 and transmit the acquired temperature to a battery management system to accurately monitor the real-time temperature of the multiple cells 10.

The battery provided in this embodiment is a large cylindrical battery, and the cells 10 of the large cylindrical battery are cylindrical. As shown in FIG. 1, to reduce the temperature rise of the cells 10, liquid cooling plates 20 are mounted on the two sides of the cells 10 in the circumferential direction respectively. The liquid cooling plates 20 are serpentine structures to better fit the circumferential side surface of the cells 10 and improve the cooling effect. Due to the presence of the liquid cooling plates 20, the temperature acquisition assembly is mounted on the circumferential side surface of the cylindrical cell and located between the two adjacent liquid cooling plates 20 to minimize the impact of the liquid cooling plates 20 on the acquired temperature.

Due to the presence of the liquid cooling plates, the mounting space above the cell 10 is limited. Generally, a temperature measuring member of the existing temperature acquisition assembly is adhesively mounted on the upper surface of the negative electrode of the cell 10 through a thermally conductive adhesive or is bonded to a temperature measuring frame of the temperature acquisition assembly through a thermally conductive adhesive to acquire the temperature of the cell 10 in real time. In the existing temperature acquisition assembly, the adhesively mounted temperature measuring member is prone to loosen or fall off. Moreover, the temperature measuring member is cumbersome in dismounting and mounting operations and inconvenient to replace and maintain.

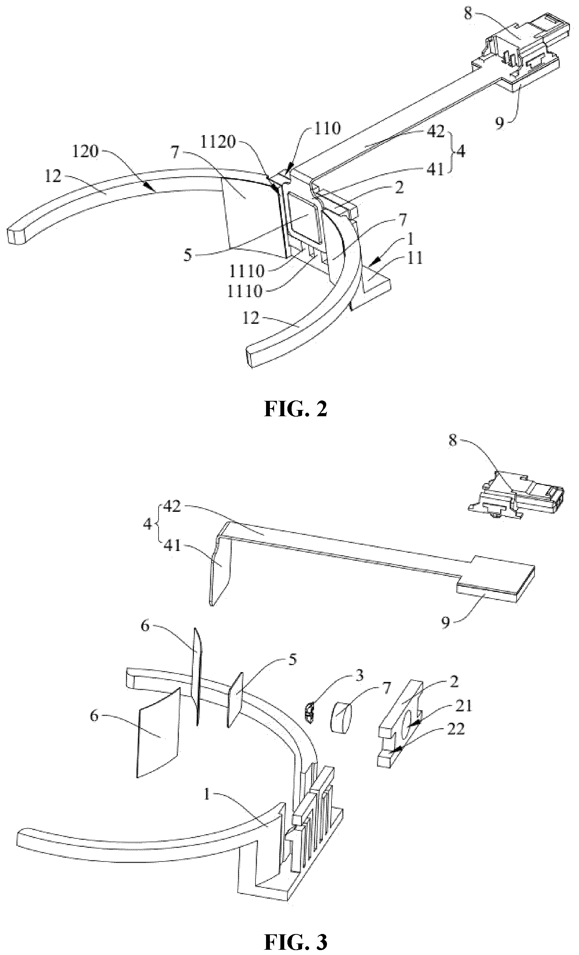

As shown in FIGS. 2 and 3, this embodiment further provides the temperature acquisition assembly. The temperature acquisition assembly includes a measurement frame 1, a tooling plate 2, a temperature measuring member 3, and an electrical connection member 4. The measurement frame 1 is capable of being mounted on the circumferential side surface of the cell 10 in a snap manner. The tooling plate 2 is detachably mounted on the measurement frame 1. The temperature measuring member 3 is mounted on the tooling plate 2 to measure the temperature of the cell 10. One end of the electrical connection member 4 is electrically connected to the temperature measuring member 3, and the temperature measuring member 3 is communicatively connected to the battery management system through the electrical connection member 4. The temperature measuring member 3 is mounted on the tooling plate 2 so that the temperature measuring member 3 can be prevented from loosening and falling off, thereby securely mounting the temperature measuring member 3 and improving the protection of the temperature measuring member 3. Moreover, the tooling plate 2 and the measurement frame 1 are detachably assembled, which implements the quick dismounting and mounting of the tooling plate 2 and the temperature measuring member 3 on the measurement frame 1, facilitates the maintenance and replacement of the temperature measuring member 3, and improves the dismounting and mounting efficiency of the temperature measuring member 3. The measurement frame 1 is provided with a mounting groove 110, and the tooling plate 2 is inserted into the mounting groove 110. An accommodation hole 21 is disposed within the tooling plate 2, and the temperature measuring member 3 is mounted within the accommodation hole 21. The temperature measuring member 3 is mounted within the accommodation hole 21 of the tooling plate 2 so that the temperature measuring member 3 can be prevented from loosening and falling off. Moreover, the tooling plate 2 is insertion-fit into the mounting groove 110 of the measurement frame 1 to implement the quick insertion and mounting between the temperature measuring member 3 and the tooling plate 2.

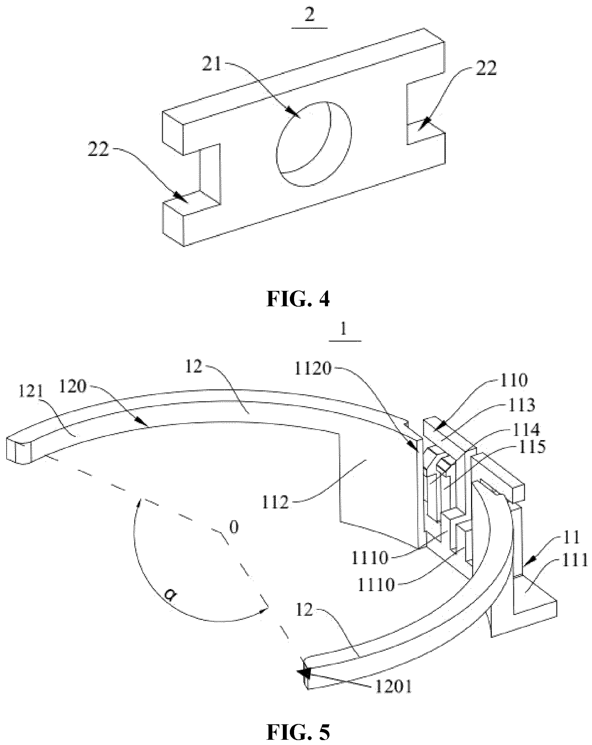

As shown in FIGS. 3 and 4, a sealant 7 is disposed within the accommodation hole 21, and the temperature measuring member 3 is located within the accommodation hole 21 and wrapped within the sealant 7. The sealant 7 is poured into the accommodation hole 21 to wrap the temperature measuring member 3, which not only provides a good limit effect on the temperature measuring member 3 but also improves the water vapor protection capability of the temperature measuring member 3. The sealant 7 provided in this embodiment may be a photosensitive adhesive that has the advantages of fast curing, high strength, and good transparency. In other embodiments, the sealant 7 may also be another colloid, which is not limited here.

The electrical connection member 4 provided in this embodiment is a flexible printed circuit (FPC) flexible bar. Since the FPC flexible bar is thin, easy to bend, and not easy to damage, the FPC flexible bar can stably transmit the temperature of the cell 10 acquired by the temperature measuring member 3 to the battery management system. The temperature measuring member 3 provided in this embodiment is a thermistor that has the advantages of high measurement accuracy, a small volume, and easy to dismount, mount, and maintain. The temperature measuring member 3 may also be other temperature measuring members such as a temperature sensor, which is not limited here.

As shown in FIGS. 2 and 3, the electrical connection member 4 includes a first connection portion 41 and a second connection portion 42 that are bendably connected. The first connection portion 41 extends along the axial direction of the cell 10 and is electrically connected to the temperature measuring member 3, and the first connection portion 41 is connected to the second connection portion 42 at an included angle. The second connection portion 42 is communicatively connected to the battery management system. The electrical connection member 4 is a bendable structure, which reduces the length of the electrical connection member 4 along the axial direction of the cell 10, thereby reducing the space occupied by the electrical connection member 4 along the axial direction of the cell 10, avoiding interference between the electrical connection member 4 and a cell contact system (CCS) assembly on the top of the cell 10, and implementing reliably mounting of the electrical connection member 4.

The second connection portion 42 (the other end of the second connection portion 42 away from the temperature measuring member 3) is electrically connected to a connector 8. The connector 8 is configured to be plugged with an external contact to achieve the communication connection between the electrical connection member 4 and the battery management system, thereby improving the wiring efficiency and stability of the electrical connection member 4. Since the electrical connection member 4 (the FPC flexible bar) is easy to bend, a second stiffener 9 is also mounted at one end of the electrical connection member 4 where the connector 8 is mounted, and the second stiffener 9 and the connector 8 are located on two opposite sides of the electrical connection member 4 respectively. The second stiffener 9 is disposed so that the structural strength of the end portion of the second connection portion 42 where the connector 8 is mounted can be enhanced, and the connection stability between the electrical connection member 4 and the connector 8 can be improved. Since the electrical connection member 4 and the connector 8 are connected through welding, the second stiffener 9 may provide support for the electrical connection member 4, and a welding device performs welding positioning on the electrical connection member 4 by clamping and securing the second stiffener 9, thereby improving the welding quality and efficiency between the electrical connection member 4 and the connector 8.

As shown in FIG. 5, the measurement frame 1 includes a base body 11 and an arm plate 12. The tooling plate 2 is detachably mounted on the base body 11. The arm plate 12 extends outwards from at least one side of the base body 11. The base body 11 and the arm plate 12 form a slot 120 that can be snap-fit with the cell 10. Arm plates 12 extend outwards from two opposite sides of the base body 11 respectively. A mounting groove 110 is disposed within the base body 11. The top of the mounting groove 110 has an opening. The tooling plate 2 is inserted into and mounted within the mounting groove 110 or pulled out from the mounting groove 110 through the opening, thereby implementing the quick dismounting and mounting of the tooling plate 2.

Since the cell 10 is cylindrical, the arm plate 12 includes a circular arc plate 121 that elastically holds the circumferential side surface of the cell 10 tightly. The arm plate 12 provided in this embodiment is an arc plate in the shape of a long strip so that the arm plate 12 can snap into the narrow space between the top of the negative electrode of the cell 10 and the top of the liquid cooling plate 20. The measurement frame 1 is mounted on the circumferential side surface of the cell 10 along the radial direction of the cell 10 so that the cell 10 can enter the slot 120 from a notch 1201. The two arm plates 12 elastically hold the cell 10 tightly so that the measurement frame 1 can be securely mounted on the cell 10.

As shown in FIG. 5, the central angle α corresponding to the notch 1201 ranges from 120° to 160°. For example, the central angle α provided in this embodiment may be 120°, 130°, 140°, 150°, or 160°. Configuring the central angle α to have the preceding value can ensure that the notch 1201 can have sufficient spacing, which is convenient for the cell 10 to enter the slot 120 from the notch 1201, while also ensuring that the two arm plates 12 can hold the cell 10 tightly to implement the reliably mounting of the measurement frame 1. When the central angle α is too small, the spacing of the notch 1201 is less, and it is difficult for the cell 10 to enter the slot 120, which increases the difficulty in mounting the measurement frame 1; when the central angle α is too large, the extension length of the arm plate 12 is less, and the cell 10 cannot be held tightly, which reduces the stability of the measurement frame 1.

As shown in FIG. 5, the base body 11 includes a bottom plate 111, a first side plate 112, and a second side plate 113. The first side plate 112 and the second side plate 113 are disposed on two opposite sides of the bottom plate 111 respectively so that the bottom plate 111, the first side plate 112, and the second side plate 113 can form the mounting groove 110 by enclosure. The arm plates 12 extend outwards from two opposite sides of the first side plate 112 respectively. Since the cell 10 is cylindrical, the first side plate 112 is arc-shaped and concentric with the arm plates 12 so that the first side plate 112 and the two arm plates 12 can tightly fit with the circumferential side surface of the cell 10, thereby improving the mounting stability of the measurement frame 1; and at the same time, the temperature measuring member 3 can be as adjacent to the cell 10 as possible to improve the measurement accuracy.

The inner side surface of the first side plate 112 is provided with an adhesive layer 6, and the adhesive layer 6 can be bonded to the cell 10. When the measurement frame 1 is mounted on the circumferential side surface of the cell 10 along the radial direction of the cell 10, the adhesive layer 6 is bonded to the circumferential side surface of the cell 10, thereby improving the connection strength and mounting stability between the measurement frame 1 and the cell 10. Double-sided tape may be bonded to the side surface of the first side plate 112 to form the adhesive layer 6. The double-sided tape has good bonding strength, is easy to use, and has a low cost.

As shown in FIGS. 4 and 5, the tooling plate 2 is further provided with a positioning groove 22, and the base body 11 is provided with a first snap 114; the snap head of the first snap 114 engages within the positioning groove 22. The first snap 114 extends into the mounting groove 110 and is snap-fit into the positioning groove 22 of the tooling plate 2 to lock the tooling plate 2 within the mounting groove 110, thereby improving the reliable fixation of the tooling plate 2 and the temperature measuring member 3.

Two opposite sides of the tooling plate 2 are each provided with a positioning groove 22, and the bottom plate 111 is correspondingly provided with two first snaps 114. When the tooling plate 2 is inserted into and mounted within the mounting groove 110, the two first snaps 114 snap into the two positioning grooves 22 respectively, thereby improving the stability of the tooling plate 2. The second side plate 113 includes two L-shaped plates opposite to each other. The two L-shaped plates form avoidance space for mounting the two first snaps 114 by enclosure so that the first snaps 114 and the second side plate 113 can be located on the same side of the bottom plate 111, and each first snap 114 can be mounted within the avoidance space enclosed by a respective L-shaped plate.

As shown in FIG. 5, the base body 11 is provided with a detection port 1120 (the detection port 1120 is provided on the first side plate 112), the mounting groove 110 communicates with the slot 120 through the detection port 1120, and the end of the electrical connection member 4 extends into the detection port 1120 and is electrically connected to the temperature measuring member 3. The detection port 1120 is disposed so that the first side plate 112 can be prevented from isolating the cell 10 from the temperature measuring member 3, thereby facilitating the accurate measurement of the temperature of the cell 10 by the temperature measuring member 3.

As shown in FIGS. 2 and 3, the inner side of the first connection portion 41 is electrically connected to the temperature measuring member 3, the outer side of the first connection portion 41 away from the temperature measuring member 3 is provided with a first stiffener 5, and the first stiffener 5 can tightly abut against the circumferential side surface of the cell 10. Since the electrical connection member 4 (the FPC flexible bar) is easy to bend, the first stiffener 5 is also mounted at the end of the first connection portion 41 where the temperature measuring member 3 is welded, and the first stiffener 5 and the temperature measuring member 3 are located on two opposite sides on the end of the first connection portion 41 respectively. The first stiffener 5 is disposed so that the structural strength of the end portion of the first connection portion 41 where the temperature measuring member 3 is welded can be improved, and the connection stability between the electrical connection member 4 and the temperature measuring member 3 can be improved. Since the electrical connection member 4 and the temperature measuring member 3 are connected by welding, the first stiffener 5 provides support for the electrical connection member 4 so that the welding device can perform welding positioning on the electrical connection member 4 by clamping and securing the first stiffener 5, thereby improving the welding quality and efficiency between the electrical connection member 4 and the temperature measuring member 3.

In this embodiment, the temperature measuring member 3 is connected to the circumferential side surface of the cell 10 through the electrical connection member 4 and the first stiffener 5. Since the thickness of the electrical connection member 4 and the thickness of the first stiffener 5 are small, the impact on the measurement accuracy of the temperature measuring member 3 is small, thereby avoiding affecting the accurate measurement of the temperature of the cell 10 by the temperature measuring member 3.

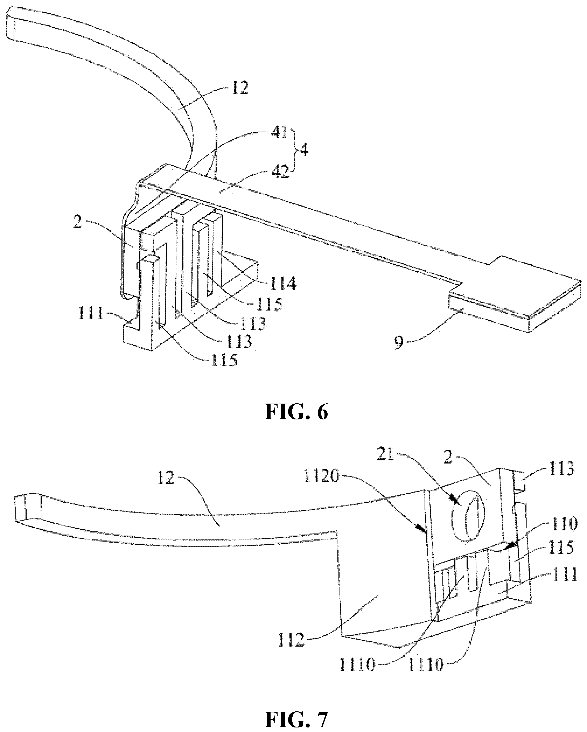

As shown in FIGS. 5 and 6, the base body 11 is provided with a second snap 115, and the snap head of the second snap 115 abuts against one side of the tooling plate 2 away from the detection port 1120 tightly so that the other side of the tooling plate 2 facing the detection port 1120 can abut against the sidewall of the base body 11 tightly. The tooling plate 2 tightly abuts against the sidewall of the base body 11 on which (that is, the inner side of the first side plate 112) the detection port 1120 is provided through the second snap 115, which increases the stability of the tooling plate 2 within the mounting groove 110; the first stiffener 5 tightly fits with the cell 10 through the second snap 115 to avoid a clearance between the tooling plate 2 and the cell 10, which ensures the measurement accuracy of the temperature measuring member 3. The bottom plate 111 is provided with two second snaps 115. Each second snap 115 is mounted within avoidance space enclosed by a respective L-shaped plate 113. One second snap 115 is spaced apart from one first snap 114.

As shown in FIGS. 5 and 7, the bottom plate 111 is provided with bosses 1110, and the bosses 1110 are configured to support and raise the height of the tooling plate 2 to increase the heights of the first snaps 114 and the second snaps 115, thereby ensuring a good elastic deformation effect of the first snaps 114 and the second snaps 115, avoiding large obstruction or jamming of the first snap 114 and the second snap 115 (that is, the snap head of the first snap 114 cannot pop out from the positioning groove 22) when the tooling plate 2 is dismounted or mounted, and implementing the dismounting and mounting operations of the tooling plate 2 within the mounting groove 110.

## Claims

1. A temperature acquisition assembly, comprising a measurement frame (1), a tooling plate (2), a temperature measuring member (3), and an electrical connection member (4), wherein the measurement frame (1) is mounted on a circumferential side surface of a cell (10) in a snap manner, the tooling plate (2) is detachably mounted on the measurement frame (1), and the temperature measuring member (3) is mounted on the tooling plate (2) and is configured to measure temperature of the cell (10); the temperature measuring member (3) is communicatively connected to a battery management system through the electrical connection member (4).

2. The temperature acquisition assembly of claim 1, wherein the measurement frame (1) comprises:
a base body (11), wherein the tooling plate (2) is detachably mounted on the base body (11); and
an arm plate (12), wherein the arm plate (12) extends outwards from at least one side of the base body (11), and the base body (11) and the arm plate (12) form a slot (120) capable of being snap-fit with the cell (10).

3. The temperature acquisition assembly of claim 2, wherein the tooling plate (2) is provided with a positioning groove (22), and the base body (11) is provided with a first snap (114), wherein a snap head of the first snap (114) engages within the positioning groove (22).

4. The temperature acquisition assembly of claim 2 or 3, wherein the base body (11) is provided with a mounting groove (110) and a detection port (1120), and the tooling plate (2) is inserted into the mounting groove (110).

5. The temperature acquisition assembly of claim 4, wherein the base body (11) is provided with a second snap (115), wherein a snap head of the second snap (115) tightly abuts against a side of the tooling plate (2) away from the detection port (1120) to enable the other side of the tooling plate (2) facing the detection port (1120) to tightly abut against a sidewall of the base body (11).

6. The temperature acquisition assembly of claim 4, wherein the base body (11) comprises a bottom plate (111), a first side plate (112), and a second side plate (113), wherein the first side plate (112) and the second side plate (113) are disposed on two opposite sides of the bottom plate (111) respectively to enable the bottom plate (111), the first side plate (112), and the second side plate (113) to form the mounting groove (110) by enclosure; arm plates (12) extend outwards on two opposite sides of the first side plate (112) respectively, and the detection port (1120) is provided on the first side plate (112).

7. The temperature acquisition assembly of claim 6, wherein an inner side surface of the first side plate (112) is provided with an adhesive layer (6), wherein the adhesive layer (6) is capable of being bonded to the cell (10).

8. The temperature acquisition assembly of any one of claims 2 to 7, wherein the arm plate (12) comprises a circular arc plate (121) that elastically holds the circumferential side surface of the cell (10) tightly.

9. The temperature acquisition assembly of any one of claims 2 to 8, wherein the slot (120) is provided with a notch (1201), wherein a central angle corresponding to the notch (1201) ranges from 120° to 160°.

10. The temperature acquisition assembly of any one of claims 1 to 9, wherein the tooling plate (2) is provided with an accommodation hole (21), a sealant (7) is disposed within the accommodation hole (21), and the temperature measuring member (3) is located within the accommodation hole (21) and wrapped within the sealant (7).

11. The temperature acquisition assembly of any one of claims 1 to 10, wherein the electrical connection member (4) comprises a first connection portion (41) and a second connection portion (42) that are bendably connected, wherein the first connection portion (41) extends along an axial direction of the cell (10), the first connection portion (41) is electrically connected to the temperature measuring member (3), the first connection portion (41) is connected to the second connection portion (42) at an included angle, and the second connection portion (42) is communicatively connected to the battery management system.

12. The temperature acquisition assembly of claim 11, wherein an inner side of the first connection portion (41) is electrically connected to the temperature measuring member (3), and an outer side of the first connection portion (41) away from the temperature measuring member (3) is provided with a first stiffener (5) capable of tightly abutting against the circumferential side surface of the cell (10).

13. The temperature acquisition assembly of claim 11 or 12, wherein the second connection portion (42) is electrically connected to a connector (8), and a second stiffener (9) is mounted on the second connection portion (42), wherein the second stiffener (9) and the connector (8) are located on two opposite sides of the second connection portion (42) respectively.

14. A battery, comprising a battery module and the temperature acquisition assembly of any one of claims 1 to 13, wherein the measurement frame (1) of the temperature acquisition assembly engages with the circumferential side surface of the cell (10) of the battery module.
